# EUROPEAN PATENT SPECIFICATION

(11) **EP 3 126 639 B1**
(45) Date of publication and mention of the grant of the patent: **11.07.2018**
(21) Application number: 15724543.2
(22) Date of filing: 08.05.2015
(51) Int. Cl.: F01D 9/04, F02C 7/28

(54) **TURBOMACHINE WITH A SEAL FOR SEPARATING WORKING FLUID AND COOLANT FLUID OF THE TURBOMACHINE AND USE OF THE TURBOMACHINE**
TURBOMASCHINE MIT EINER DICHTUNG ZUR TRENNUNG VON ARBEITSFLÜSSIGKEIT UND KÜHLFLÜSSIGKEIT DER TURBOMASCHINE UND VERWENDUNG DER TURBOMASCHINE
TURBOMACHINE AVEC UN JOINT DE SÉPARATION DE FLUIDE DE TRAVAIL, FLUIDE DE REFROIDISSEMENT DE LA TURBOMACHINE ET UTILISATION DE LA TURBOMACHINE

(30) Priority: 27.05.2014 EP 14170015
(43) Date of publication of application: 08.02.2017
(73) Proprietor: Siemens Aktiengesellschaft, 80333 München (DE)
(72) Inventor: GRANBERG, Per, S-61021 Norsholm (SE); SZIJARTO, Janos, S-61295 Finspong (SE)
(86) International application number: PCT/EP2015/060182
(87) International publication number: WO 2015/180945

(56) References cited:
- EP-A2- 1 939 404
- US-A- 2 738 949

## Description

### BACKGROUND OF THE INVENTION

### 1. Field of the invention

The present invention refers to a turbomachine with a seal for separating working fluid and coolant fluid of the turbomachine and use of the turbomachine.

### 2. Description of the related art

A turbomachine, for instance a gas turbine or a steam turbine, is used for power generation. Such a turbomachine comprises a stator with at least one stator component and a rotor with at least one rotor component.

A rotor component of the rotor is an axial shaft with a plurality of rotor blades. The rotor blades are arranged annularly around the axial shaft.

Stator components are a (main) stator ring, a plurality of guide vanes for guiding working fluid of the turbomachine (hot gas in case of a gas turbine and superheated steam in case of a steam turbine) and a vane carrier ring for carrying the guide vanes. The stator ring and the rotor shaft are coaxially arranged to each other. The guide vanes are arranged annularly around the vane carrier ring.

The guide vanes assist in guiding the working fluid for the impingement of the working fluid on the rotor blades of the rotor.

The working fluid is lead through a working fluid channel of the turbomachine. The working fluid channel is bordered by at least one of the stator components and by at least one of the rotor components. Due to very high temperatures of the working fluid the bordering stator component and/or the bordering rotor component are highly stressed.

In order to reduce the surface temperature of the guide vanes and to increase the operational life span of the guide vanes, a coolant fluid (cooling fluid) is dispensed for cooling the guide vanes. A flow of the coolant fluid on the surface of a guide vane causes a transfer of heat from the guide vane to the coolant fluid, thereby reducing the temperature of the guide vane.

For that, the coolant fluid is dispensed into a coolant fluid channel (cooling fluid channel) which is preferably located between the vanes and the stator ring. The coolant fluid channel has to be sealed for an efficient circulation of the coolant fluid inside the coolant fluid channel and for preventing a leakage of the coolant fluid from the coolant fluid channel into other sections of the turbomachine, especially the working fluid channel.

However, the arrangement of the guide vanes around the vane carrier ring of the stator, and the arrangement of the coolant fluid channel between the guide vanes and the guide vane carrier ring of the stator, can result in one or more gaps. Furthermore, due to a relative displacement of a guide vane, guide vane carrier ring and the main stator ring during the operation of the turbomachine, a dilation of the existing gaps can't be avoided. This leads to an increased leakage of the coolant fluid into other sections of the turbomachine. Therewith, the desired cooling of the guide vanes is not achieved. An efficiency of the cooling mechanism is reduced.

According to US 2,738,949 A a nozzle guide vane has an internal cooling passage. The rotating parts and the non-rotating parts are separated by labyrinth seals.

In order to reduce the described problem the aforementioned gaps have to be avoided for preventing the leakage of the coolant fluid from the coolant fluid channel. Additionally, sealing arrangements with piston rings for sealing the gaps are provided. However, such sealing arrangements comprise stiff sealing components. During operation, cracks in the stiff sealing components occur. These cracks lead to an increased leakage. Thus, the sealing efficiency of the sealing components is limited.

### SUMMARY OF THE INVENTION

It is an object of the invention to provide a turbomachine with an efficient sealing for separating the coolant fluid of the turbomachine and the working fluid of the turbomachine.

A further object of the invention is the use of the turbomachine.

These objects are achieved by the invention specified in the claims.

The invention is directed to a turbomachine which comprises a stator with at least one stator component, a rotor with at least one rotor component, at least one cavity between the rotor and the stator and at least one working fluid channel for channeling a working fluid for driving the rotor, wherein the working fluid channel is bordered by the stator component and the rotor component. The stator component comprises at least one coolant fluid channel for cooling the stator component with the aid of a coolant fluid and at least one separation barrier is arranged between the cavity and the coolant fluid channel for separating the working fluid channel and the coolant fluid channel from each other. The separation barrier comprises at least two piston rings, the two piston rings are axially arranged to each other defining a piston ring space between the piston rings. The piston ring space is a part of the coolant fluid channel and the piston rings are in sliding contact with a first one of the stator component.

The piston rings are particularly used in between two stator components and not between a rotating and a non-rotating component.

This turbomachine is used for producing electricity by leading the working fluid to rotor blades of the rotor through the working fluid channel. For that, the rotor is coupled to at least one generator. Alternatively this turbomachine can be used to mechanically drive a further component, like a pump or compressor.

The working fluid is hot gas of a gas turbine or superheated steam of a steam turbine. The hot gas of the gas turbine comprises exhaust gases of a burning process (oxidation of a fuel). A temperature of the hot gas reaches temperatures of more than 1000 °C. The coolant fluid is preferably air.

There is a first piston ring (forward piston ring) and a second piston ring (aft piston ring). The piston rings are arranged such that piston ring rotational axes of the piston rings (parallel to normal of piston ring planes which are formed by the piston rings) are substantially parallel oriented to a radial direction of the rotor (thus, the piston rings lie substantially perpendicular to the axial direction of the rotor). Substantially parallel or perpendicular includes a deviation of the orientation of up to 10° from the parallel or perpendicular orientation. Preferably, the deviation is below 5°.

By the aid of the piston rings an efficient cooling of the stator component is possible. Additionally, by the aid of the piston rings working fluid can't get to the coolant fluid channel and/or coolant fluid can't get to the working fluid channel. A contacting of the coolant fluid and the working fluid is inhibited. The fluids don't come into contact to each other.

Concerning a preferred embodiment the stator component is a vane carrier ring. The vane carrier ring - which is a stator component - comprises the coolant fluid channel. Guide vanes - also stator components - are attached to the vane carrier ring such that the guide vanes can be cooled via the coolant fluid which can be led trough the coolant fluid channel.

Preferably, the stator comprises at least one further stator component which is a main stator ring. The vane carrier ring and the main stator ring are connected to each other via the piston rings such that the piston ring space is additionally bordered by the vane carrier ring and the main stator ring. The piston ring space is formed by the piston rings, the vane carrier ring and the main stator ring.

Concerning a further preferred embodiment the vane carrier ring and/or the main stator ring comprise at least one piston ring gap for accommodating at least one of the piston rings. The piston rings can be at least partly located in the piston ring gaps. Such a piston ring gap can be formed in the vane carrier ring and/or in the main stator ring. In such a configuration the piston rings may be inserted into a piston ring gap at one surface. The other surface shall not have such a gap so that the other radial end of the piston ring can slide over an opposing surface.

Preferably, the piston rings and an opposing surface are developed such that a thermally induced replacement and/or thermally induced movement of the vane carrier ring and/or the main stator ring can be compensated. Due to thermal stress which occurs while the operation of the turbomachine components of the turbomachine move relatively to each other. By this, relatively large axial movements and/or relatively small radial movements occur and can be compensated by the inventive concept. With the aid of the invention these movements don't affect the efficient cooling of the components. The sealing mechanism is very reliable.

Preferably each of the piston rings is placed into a piston ring gap - i.e. a cylindrical depression or slot - at one radial end of the piston ring. At the other radial end of the piston ring, it is not inserted into a gap of an opposite surface but just being in sliding contact with an opposite surface which is cylindrical. This allows that the piston rings can slide over this cylindrical surface and therefore allows adaption to temperature effects.

### BIEF DESCRIPTION OF THE DRAWINGS

Further features and advantages of the invention are produced from the description of exemplary embodiment with reference to the drawings. The drawings are schematic.

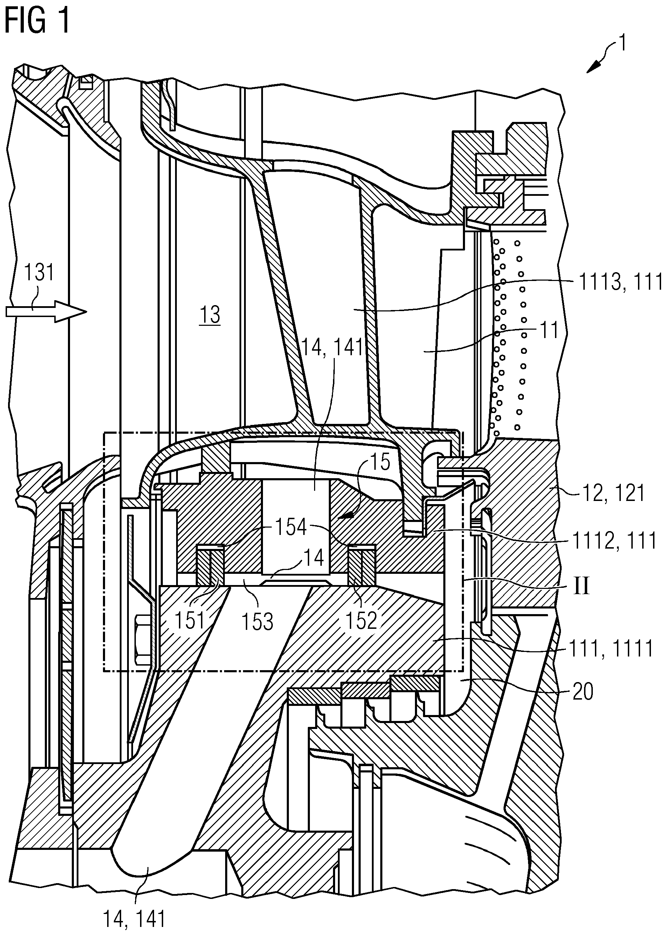

- Figure 1: shows a cross section of a turbomachine.

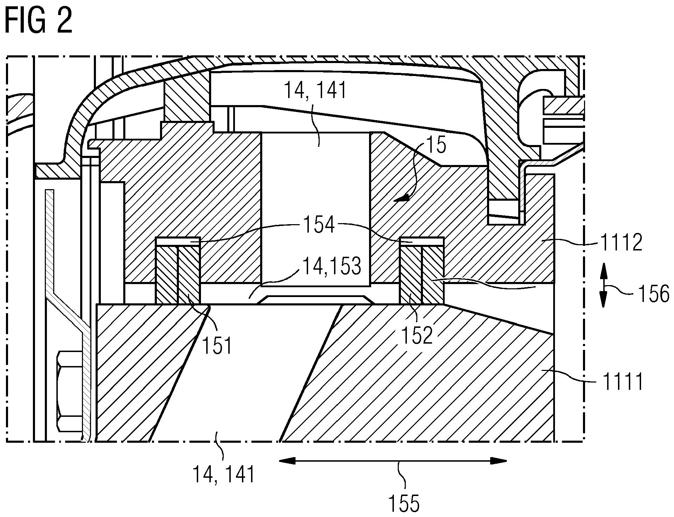

- Figure 2: shows a detail of figure 1.

### DETAILED DESCRIPTION OF THE INVENTION

Given is a turbomachine 1. The turbomachine is a gas turbine. The turbomachine 1 comprises a stator 11 with stator components 111. Stator components are an annular main stator ring 1111, an annular vane carrier ring 1112 and guide vanes 1113.

The turbomachine comprises additionally a rotor 12 with at least one rotor component 121. The rotor component comprises an axial rotor shaft on which a number of rotor blades is arranged for driving the rotor shaft. The rotor shaft, the vane carrier ring 1112 and main stator ring 1111 are coaxially arranged to each other.

At least one working fluid channel 13 for channeling the working fluid (131, hot exhaust gas of a combustion process) to the rotor blades is arranged between the stator components 111 and the rotor shaft 121. Through the working fluid channel 13 the working fluid 131 can be led to the rotor blades for driving the rotor 12. The working fluid channel 13 is bordered by the stator components (main stator ring, vane carrier ring) and the rotor component (rotor shaft).

Between stator parts and rotor parts there are cavities 20 in which substantially hot fluid from the working fluid channel 13 can ingress, typically mixed with cool sealing fluid.

The stator components comprise a coolant fluid channel 14 for cooling the stator components with the aid of a coolant fluid 141. The coolant fluid is air.

Between the cavity 20 and the coolant fluid channel 14 a separation barrier 15 is arranged, for example for separating the coolant fluid channel 14 and the working fluid channel 13 or the cavity 20 from each other.

The separation barrier 15 comprises two piston rings (forward piston ring 151 and aft piston ring 152). The two piston rings 151 and 152 are axially arranged to each other defining a piston ring space 153 between the piston rings 151 and 152. The piston ring space 153 is a part of the coolant fluid channel 14.

The vane carrier ring 1112 and the main stator ring 1111 comprise piston ring gaps 154 for accommodating the piston rings 151, 152. The piston rings 151 and 152 can be located in the piston ring gaps 154. The piston ring gap 154 is substantially a cylindrical slot in which a piston ring can be partly inserted.

According to the figures, only one radial end of a piston ring (151 or 152) is inserted in such a piston ring gap 154. The other end of that piston ring (151 or 152) is not inserted in such a slot but can slide over the opposing surface.

The width of the piston ring gaps 154 should be fitted for the width of the piston ring 151 or 152, so that the piston ring fits very precise into the slot.

With the aid of the piston rings 151 and 152 a thermally induced replacement and a thermally induced movement of the vane carrier ring 1112 and the main stator ring 1111 due to relatively large axial movements 155 and/or relatively small radial movements 155 can be compensated.

This turbomachine is used for producing electricity by leading the working fluid to the rotor blades of the rotor through the working fluid channel. For the production of electricity the rotor is coupled to a generator.

## Claims

1. Turbomachine (1) comprising
- a stator (11) with at least one stator component (111, 1111, 1112));
- a rotor (12) with at least one rotor component (121);
- at least one cavity (20) between the rotor (12) and the stator (11);
- at least one working fluid channel (13) for channeling a working fluid (131) for driving the rotor, wherein
- the working fluid channel is bordered by the stator component and the rotor component;
- the stator component (111, 1111, 1112) comprises at least one coolant fluid channel (14) for cooling the stator component (111, 1111, 1112) with the aid of a coolant fluid (141); and
- at least one separation barrier (15) is arranged between the cavity (20) and the coolant fluid channel (14) for separating the working fluid channel (13) and the coolant fluid channel (14) from each other;
**characterized in that**
- the separation barrier (15) comprises at least two piston rings (151, 152);
- the two piston rings (151, 152) are axially arranged to each other defining a piston ring space (153) between the piston rings (151, 152);
- the piston ring space (152) is a part of the coolant fluid channel (14); and
- the piston rings (151, 152) are in sliding contact with a first one of the stator component (111, 1111, 1112).

2. Turbomachine according to claim 1, wherein the working fluid (141) is hot gas of a gas turbine or superheated steam of a steam turbine.

3. Turbomachine according to claim 1 or 2, wherein the stator component (111) is a vane carrier ring (1112).

4. Turbomachine according to claim 3, wherein
- the stator (12) comprises at least one further stator component (111) which is a main stator ring (1111) and
- the vane carrier ring (1112) and the main stator ring (1111) are connected to each other via the piston rings (151, 152) such that the piston ring space (152) is additionally bordered by the vane carrier ring (1112) and the main stator ring (1111).

5. Turbomachine according to one of the claims 1 to 4, wherein the vane carrier ring (1112) and/or the main stator ring (1111) comprise at least one piston ring gap (154) for accommodating at least one of the piston rings (151, 152).

6. Turbomachine according to claim 5, wherein the piston rings (151, 152) are developed such that a thermally induced replacement and/or thermally induced movement of the vane carrier ring (1112) and/or the main stator ring (1111) can be compensated.

7. Turbomachine according to one of the claims 1 to 6, wherein one of the carrier ring (1112) and the main stator ring (1111) has a cylindrical surface section and
the piston rings (151, 152) are in sliding contact with that cylindrical surface section.

8. Turbomachine according to one of the claims 1 to 7, wherein the piston rings (151, 152) are designed such that a thermally induced replacement and/or thermally induced movement of the vane carrier ring (1112) and/or the main stator ring (1111) can be compensated by sliding of the piston rings (151, 152) over one of the vane carrier ring (1112) and the main stator ring (1111).

9. Use of the turbomachine according to one of the claims 1 to 8 for producing electricity or for rotating a further component by leading the working fluid to rotor blades of the rotor through the working fluid channel.

## Patentansprüche

1. Turbomaschine (1) umfassend
- einen Stator (11) mit mindestens einer Statorkomponente (111, 1111, 1112);
- einen Rotor (12) mit mindestens einer Rotorkomponente (121) ;
- mindestens einen Hohlraum (20) zwischen dem Rotor (12) und dem Stator (11);
- mindestens einen Arbeitsfluidkanal (13) zum Kanalisieren eines Arbeitsfluids (131) zum Antreiben des Rotors, wobei
- der Arbeitsfluidkanal durch die Statorkomponente und die Rotorkomponente begrenzt ist;
- die Statorkomponente (111, 1111, 1112) mindestens einen Kühlfluidkanal (14) zum Kühlen der Statorkomponente (111, 1111, 1112) mit der Hilfe eines Kühlfluids (141) umfasst; und
- mindestens eine Trennwand (15) zwischen dem Hohlraum (20) und dem Kühlfluidkanal (14) zur Trennung des Arbeitsfluidkanals (13) und des Kühlfluidkanals (14) voneinander angeordnet ist;
**dadurch gekennzeichnet, dass**
- die Trennwand (15) mindestens zwei Kolbenringe (151, 152) umfasst;
- die zwei Kolbenringe (151, 152) axial zueinander angeordnet sind, einen Kolbenringraum (153) zwischen den Kolbenringen (151, 152) definierend;
- der Kolbenringraum (152) ein Teil des Kühlfluidkanals (14) ist; und
- die Kolbenringe (151, 152) in Gleitkontakt mit einer ersten der Statorkomponente (111, 1111, 1112) sind.

2. Turbomaschine nach Anspruch 1, wobei das Arbeitsfluid (141) ein heißes Gas einer Gasturbine oder Heißdampf einer Dampfturbine ist.

3. Turbomaschine nach Anspruch 1 oder 2, wobei die Statorkomponente (111) ein Schaufelträgerring (1112) ist.

4. Turbomaschine nach Anspruch 3, wobei
- der Stator (12) mindestens eine weitere Statorkomponente (111) umfasst, die ein Hauptstatorring (1111) ist, und
- der Schaufelträgerring (1112) und der Hauptstatorring (1111) über die Kolbenringe (151, 152) miteinander verbunden sind, sodass der Kolbenringraum (152) zusätzlich durch den Schaufelträgerring (1112) und den Hauptstatorring (1111) begrenzt ist.

5. Turbomaschine nach einem der Ansprüche 1 bis 4, wobei der Schaufelträgerring (1112) und/oder der Hauptstatorring (1111) mindestens einen Kolbenringspalt (154) zum Aufnehmen mindestens eines der Kolbenringe (151, 152) umfassen.

6. Turbomaschine nach Anspruch 5, wobei die Kolbenringe (151, 152) so entwickelt sind, dass ein thermisch veranlasster Versatz und/oder eine thermisch veranlasste Bewegung des Schaufelträgerrings (1112) und/oder des Hauptstatorrings (1111) kompensiert werden können.

7. Turbomaschine nach einem der Ansprüche 1 bis 6, wobei der Trägerring (1112) oder der Hauptstatorring (1111) einen zylindrischen Oberflächenabschnitt hat und
die Kolbenringe (151, 152) in Gleitkontakt mit diesem zylindrischen Oberflächenabschnitt sind.

8. Turbomaschine nach einem der Ansprüche 1 bis 7, wobei die Kolbenringe (151, 152) so gestaltet sind, dass ein thermisch veranlasster Versatz und/oder eine thermisch veranlasste Bewegung des Schaufelträgerrings (1112) und/oder des Hauptstatorrings (1111) durch ein Gleiten des Kolbenrings (151, 152) über den Schaufelträgerring (1112) oder den Hauptstatorring (1111) kompensiert werden können.

9. Verwendung der Turbomaschine nach einem der Ansprüche 1 bis 8 zum Erzeugen von Elektrizität oder zum Rotieren einer weiteren Komponente, indem das Arbeitsfluid durch den Arbeitsfluidkanal zu Rotorschaufeln des Rotors geführt wird.

## Revendications

1. Turbomachine (1), comprenant
- un stator (11) ayant au moins un élément (111, 1111, 1112) de stator;
- un rotor (12) ayant au moins un élément (121) de rotor;
- au moins une cavité (20) entre le rotor (12) et le stator (11);
- au moins un canal (13) pour du fluide de travail, afin de canaliser un fluide (131) de travail pour entraîner le rotor, dans laquelle
- le canal pour du fluide de travail est bordé par l'élément de stator et par l'élément de rotor;
- l'élément (111, 1111, 1112) de stator comprend au moins un canal (14) pour du fluide réfrigérant, afin de refroidir l'élément (111, 1111, 1112) de stator à l'aide du fluide (141) réfrigérant et
- au moins une barrière (15) de séparation est disposée entre la cavité (20) et le canal (14) pour du fluide réfrigérant, afin de séparer le canal (13) pour du fluide de travail et le canal (14) pour du fluide réfrigérant, l'un de l'autre;
**caractérisée en ce que**
- la barrière (15) de séparation comprend au moins deux segments (151, 152) de piston;
- les deux segments (151, 152) de piston sont disposés axialement l'un par rapport à l'autre, en définissant un espace (153) de segment de piston entre les segments (151, 152) de piston;
- l'espace (152) de segment de piston fait partie du canal (14) pour du fluide réfrigérant et
- les segments (151, 152) de piston sont en contact glissant avec un premier élément (111, 1111, 1112) de stator.

2. Turbomachine suivant la revendication 1, dans laquelle le fluide (141) de travail est du gaz chaud d'une turbine à gaz ou de la vapeur surchauffée d'une turbine à vapeur.

3. Turbomachine suivant la revendication 1 ou 2, dans laquelle l'élément (111) de stator est une couronne (1112) porteuse d'aube.

4. Turbomachine suivant la revendication 3, dans laquelle
- le stator (12) comprend au moins un autre élément (111) de stator, qui est une couronne (1111) principale de stator et
- la couronne (1112) porteuse d'aube et la couronne (1111) principale de stator sont reliés l'un à l'autre par les segments (151, 152) de piston, de manière à ce que l'espace (152) de segment de piston soit bordé supplémentairement par la couronne (1112) de support d'aube et par la couronne (1111) principale de stator.

5. Turbomachine suivant l'une des revendications 1 à 4, dans laquelle la couronne (1112) de support d'aube et/ou la couronne (1111) principale de stator comprennent au moins un intervalle (154) de segment de piston pour loger au moins l'un des segments (151, 152) de piston.

6. Turbomachine suivant la revendication 5, dans laquelle les segments (151, 152) de piston sont développés de manière à compenser un replacement induit thermiquement et/ou un déplacement induit thermiquement de la couronne (1112) de support d'aube et/ou de la couronne (1111) principale de stator.

7. Turbomachine suivant l'une des revendications 1 à 6, dans laquelle l'une de la couronne (1112) de support et de la couronne (1111) principale de stator a une partie de surface cylindrique et les segments (151, 152) de piston sont en contact glissant avec cette partie de surface cylindrique.

8. Turbomachine suivant l'une des revendications 1 à 7, dans laquelle les segments (151, 152) de piston sont conçus de manière à ce qu'un replacement induit thermiquement et/ou un déplacement induit thermiquement de la couronne (1112) de support d'aube et/ou de la couronne (1111) principale de stator puissent être compensés par coulissement des segments (151, 152) de piston sur l'une de la couronne (1112) de support d'aube et de la couronne (1111) principale de stator.

9. Utilisation de la turbomachine suivant l'une des revendications 1 à 8 pour produire de l'électricité ou pour faire tourner un autre élément en envoyant le fluide de travail à des aubes du rotor par le canal pour du fluide de travail.
